# EUROPÄISCHE PATENTSCHRIFT

(11) **EP 2 544 295 B1**
(45) Veröffentlichungstag und Bekanntmachung des Hinweises auf die Patenterteilung: **29.01.2014**
(21) Anmeldenummer: 12182631.7
(22) Anmeldetag: 22.07.2009
(51) Int. Cl.: H01M 10/50, H01M 6/50, H01M 10/42

(54) **Batterieprüfstand**
Battery test stand
Banc d'essai de batterie

(30) Priorität: 16.09.2008 DE 102008042135
(43) Veröffentlichungstag der Anmeldung: 09.01.2013
(62) Teilanmeldung aus: 09780936.2
(73) Patentinhaber: ROBERT BOSCH GMBH, 70442 Stuttgart (DE)
(72) Erfinder: Dallinger, Frank, 70499 Stuttgart (DE); Stemmann, Jannis, 214028 Wuxi, New District (CN); Kern, Rainer, 70174 Stuttgart (DE)

(56) Entgegenhaltungen:
- WO-A1-2006/088021
- JP-A- 8 190 938

## Beschreibung

### Stand der Technik

Die vorliegende Erfindung betrifft einen Batterieprüfstand, mit welchem verschiedene Batterien untersucht bzw. überprüft werden.

Batterien werden beispielsweise im Rahmen von Entwicklung und Produktion hinsichtlich ihrer Funktion, als auch hinsichtlich Belastungsgrenzen überprüft. Dabei kann sich jedoch ein erhebliches Gefahrenpotential ergeben. Insbesondere bei übermäßiger Beladung oder Entladung oder auch bei sonstigen äußeren Umwelteinflüssen, wie z. B. einem Temperaturanstieg, können bei Reaktionen zwischen den vorhandenen Batteriematerialien (Kathode, Anode, Elektrolyt) gasförmige Spaltprodukte entstehen, welche zu einem Druckanstieg führen können. Ferner können exotherme Reaktionen eine weitere Wärmezufuhr nach sich ziehen. Infolgedessen kann die Batterie durch eine Explosion zerstört werden. Hierdurch können Arbeiten an Batterieprüfständen gefährlich sein. Es wäre somit wünschenswert, bei Batterieprüfständen eine verbesserte Sicherheit insbesondere für die dort arbeitenden Mitarbeiter zu haben.

### Vorteile der Erfindung

Der erfindungsgemäße Batterieprüfstand mit den Merkmalen des Patentanspruchs 1 weist demgegenüber den Vorteil auf, dass eine Prüfung bzw. Untersuchung von Batterien mit einer erhöhten Sicherheit möglich ist. Erfindungsgemäß kann dabei bei Bedarf eine Kühlung mit hoher Effektivität ausgeführt werden. Dies wird erfindungsgemäß dadurch erreicht, dass der Batterieprüfstand eine Kühlvorrichtung umfasst, welche mit einer Regelungseinheit verbunden ist. Eine Sensoreinrichtung ist mit der Regelungseinheit verbunden, um die Batterie zu überwachen. Wenn die Regelungseinheit erfasst, dass eine Gefahrensituation vorliegt, aktiviert sie die Kühlvorrichtung, um eine Kühlung der Batterie auszuführen, um somit einen kritischen Batteriezustand zu verhindern. Durch die erfindungsgemäße äußere Kühlung der Batterie kann somit einerseits eine Temperatur der Batterie als auch ein Druck innerhalb der Batterie abgesenkt werden, so dass eine kritische Situation vermieden werden kann. Durch die erfindungsgemäße Verwendung der Kühlvorrichtung können insbesondere auch Forschungsmuster von Batterien sicher überprüft werden.

Die Unteransprüche zeigen bevorzugte Weiterbildungen der Erfindung.

Vorzugsweise umfasst die Kühlvorrichtung einen Druckbehälter, welcher über eine Leitung mit einer Prüfzelle, in der die Batterie angeordnet ist, verbunden ist. Weiterhin umfasst die Kühlvorrichtung ein Schaltventil, welches mit der Regelungseinheit verbunden ist und welches in einem Gefahrenfall geöffnet wird, um ein im Druckbehälter gespeichertes Kühlmedium auf die Batterie zu leiten. Hierdurch kann die Batterie großflächig mit dem Kühlmittel benetzt werden, so dass sich eine hohe Kühleffektivität ergibt. Ferner kann der Druckbehälter einen großen Vorrat des Kühlmediums aufweisen, um eine möglichst lange Kühlung der Batterie ausführen zu können.

Weiter bevorzugt umfasst die Kühlvorrichtung eine Düse, welche in der Prüfzelle angeordnet ist, und welche eine Expansion des Kühlmediums nahe der Batterie ermöglicht. Das Kühlmedium wird dabei über die Düse auf die Batterie gesprüht, um eine möglichst großflächige Kühlung der Batterie zu erhalten. Vorzugsweise ist die Düse dabei oberhalb der Batterie angeordnet, so dass das Kühlmedium entlang des äußeren Umfangs der Batterie nach unten strömt. Weiter bevorzugt ist die Batterie in der Prüfzelle dabei waagrecht angeordnet, so dass eine möglichst große Fläche mit Kühlmedium benetzt werden kann.

Die Kühlvorrichtung umfasst wenigstens eine Peltier-Einheit, welche in der Prüfztelle angeordnet ist, um die Batterie zu kühlen. Die Peltier-Einheiten bestehen vorzugsweise aus flächig aneinander gesetzten Peltier-Elementen, wobei die Peltier-Elemente beispielsweise aus zwei Halbleiterkeramiken bestehen, welche durch Metallbrücken verbunden sind. Wenn ein sicherheitskritischer Zustand der zu überprüfenden Batterie eintritt, wird die Peltier-Einheit bestromt, wodurch eine der Halbleiterkeramiken abgekühlt wird, während sich die andere erhitzt. Besonders bevorzugt umfasst die Kühlvorrichtung dabei eine Vielzahl von Peltier-Einheiten, welche in Pyramidenform angeordnet sind. Hierdurch können mehrere Stufen der Kühlung erreicht werden, so dass auch hohe Temperaturdifferenzen bis zu 70 Kelvin und Temperaturen unter 0°C erreicht werden können. Vorzugsweise ist dabei die letzte Stufe der Vielzahl von Peltier-Einheiten mit einem Wärmeübertrager verbunden, welcher die Abwärme aus der Prüfzelle transportiert.

Vorzugsweise umfasst die Sensoreinrichtung einen Temperatursensor und/oder einen Drucksensor und/oder einen Kraftsensor, insbesondere einen Dehnungsmessstreifen, und/oder einen Abstandssensor. Bevorzugt sind die Sensoren dabei an einer Außenseite der Batterie angeordnet. Hierdurch wird ein einfacher Aufbau des Batterieprüfstands erreicht und insbesondere können in kurzer Zeit eine Vielzahl von Batterien überprüft werden. Es sei angemerkt, dass besonders bevorzugt mehrere verschiedene Sensoren an der Batterie angeordnet werden. Alternativ ist es selbstverständlich auch möglich, mehrere gleichartige Sensoren an einer zu untersuchenden Batterie anzuordnen.

Vorzugsweise umfasst der Batterieprüfstand ferner eine Absaugvorrichtung, um Gase oder andere Medien aus dem Inneren der Prüfzelle abzusaugen. Hierdurch wird einerseits erreicht, dass beispielsweise giftige Gase sicher aus der Prüfzelle abgesaugt werden können und andererseits ein unverhältnismäßiger Druckanstieg innerhalb der Prüfzelle vermieden wird. Ferner kann dadurch ein Unterdruck in der Prüfzelle erzeugt werden.

Gemäß einer weiteren bevorzugten Ausgestaltung der vorliegenden Erfindung umfasst der Batterieprüfstand ferner noch eine Stromunterbrechungseinrichtung, so dass zusätzlich zu der Kühlvorrichtung noch eine weitere Sicherheitseinrichtung vorhanden ist. In einem kritischen Zustand der zu untersuchenden Batterie wird ein Batteriestrom mittels der Stromunterbrechungseinrichtung unterbrochen, um eine weitere funktionsbedingte Erwärmung der Batterie zu vermeiden.

Der erfindungsgemäße Batterieprüfstand kann dabei einerseits in Forschungs- und Entwicklungsabteilungen verwendet werden, welche Batterien untersuchen, und kann ferner ebenfalls auch bei Batterieherstellern für eine Qualitätskontrolle der hergestellten Batterien verwendet werden. Hierbei weist der erfindungsgemäße Batterieprüfstand keinerlei Einschränkung hinsichtlich der zu überprüfenden Batterie auf. Insbesondere können auch Forschungsmuster, Halbzellen (elektrochemische Muster), Batteriepacks, welche aus Modulen zusammengesetzt sind und hohe Leistungen aufweisen, oder auch Lithium-Ionen-Batterien überprüft werden.

### Kurze Beschreibung der Zeichnungen

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Ansicht eines Batterieprüfstands gemäß einem ersten Ausführungsbeispiel der Erfindung, und
- Figur 2: eine schematische Ansicht eines Batterieprüfstands gemäß einem zweiten Ausführungsbeispiel der Erfindung.

### Ausführungsform der Erfindung

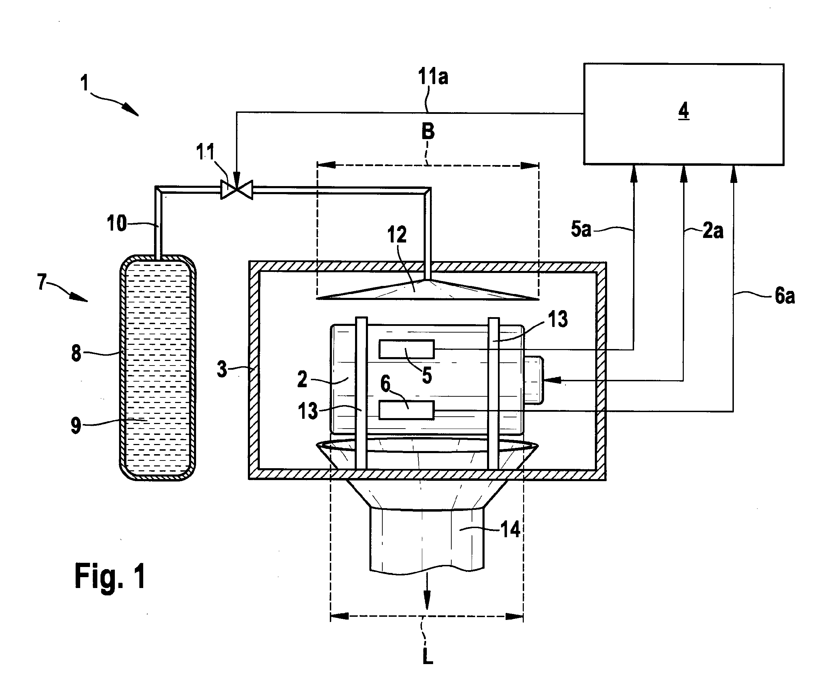

Nachfolgend wird unter Bezugnahme auf Fig. 1 ein Batterieprüfstand 1 gemäß einem bevorzugten Ausführungsbeispiel der Erfindung im Detail beschrieben.

Wie aus Fig. 1 ersichtlich ist, umfasst der Batterieprüfstand 1 eine Prüfzelle 3, in welcher eine zu überprüfende Batterie 2 angeordnet ist. Die Batterie 2 ist dabei in einer Halterung 13, welche mehrere schmale Träger umfasst, gehalten. Die Verwendung der schmalen Träger ermöglicht es insbesondere, die Versuchsergebnisse nicht aufgrund von thermischen Lasten zu verfälschen. Ferner kann eine gute Zugänglichkeit zu der zu überprüfenden Batterie 2 gewährleistet werden.

Der Batterieprüfstand 1 umfasst ferner eine Regelungseinrichtung 4 und eine Kühlvorrichtung 7. Weiterhin sind ein Drucksensor 5 und ein Temperatursensor 6 vorgesehen, welche an einer Außenseite der Batterie 2 fixiert sind. Der Drucksensor 5 und der Temperatursensor 6 sind über Leitungen 5a und 6a mit der Regelungseinheit 4 verbunden. Das Bezugszeichen 2a bezeichnet dabei eine elektrische Verbindung zwischen der Batterie 2 und der Regelungseinheit 4. Die Kühlvorrichtung 7 umfasst einen Druckbehälter 8, in welchem ein Kühlmedium 9 unter Druck angeordnet ist. Der Druckbehälter 8 ist über eine Leitung 10 mit einem Inneren der Prüfzelle 3 verbunden. In der Leitung 10 ist dabei ein Schaltventil 11 angeordnet, welches als Sperrventil ausgebildet ist und die Leitung 10 freigibt bzw. verschließt. Wie aus Fig. 1 ersichtlich ist, ist das Schaltventil 11 über eine Leitung 11 a ebenfalls mit der Regelungseinheit 4 verbunden. Am Ende der Leitung 10 ist ferner eine Düse 12 angeordnet, um das bei einem geöffneten Schaltventil 11 zugeführte Kühlmedium 9 zu versprühen. Wie aus Fig. 1 ersichtlich ist, weist die Düse 12 dabei eine Breite B auf, welche größer als eine Länge L der Batterie 2 ist. Die Düse 12 ist oberhalb der Batterie 2 angeordnet, so dass die Batterie 2 von oben mit Kühlmittel besprüht wird und das Kühlmittel dann an der Außenseite der Batterie nach unten strömen bzw. laufen kann. Hierdurch werden effektiv auch mittlere und untere Bereiche der Batterie 2 gekühlt.

Das Bezugszeichen 14 bezeichnet ferner eine Absaugvorrichtung, um Gase und/oder Flüssigkeiten aus der Prüfzelle 3 abzusaugen und in der Prüfzelle einen Unterdruck zu erzeugen.

Die Funktion des Batterieprüfstands 1 in einem Notfall ist dabei wie folgt. Die Sensoren 5, 6 erfassen kontinuierlich in vorbestimmten Abständen entsprechende Sensorwerte, welche der Regelungseinheit 4 zugeführt werden. Die Regelungseinheit 4 überprüft die zugeführten Sensorwerte beispielsweise durch einen Vergleich mit gespeicherten Werten. Sobald ein Sensorwert einen vorbestimmten Schwellenwert erreicht, bestimmt die Regelungseinheit 4, dass ein Notfall vorliegt und aktiviert die Kühlvorrichtung 7. Hierzu wird das Schaltventil 11 geöffnet, so dass das Kühlmedium 9 über die Leitung 10 zur Düse 12 geführt werden kann. Durch die schlagartige Ausdehnung des Kühlmediums an der Düse 12 kühlt sich das Kühlmedium ab und wird auf die Außenseite der Batterie 2 zugeführt. Hierbei sei angemerkt, dass das Kühlmedium ein Gas oder auch eine Flüssigkeit sein kann. Vorzugsweise wird gleichzeitig auch die Absaugvorrichtung 14 aktiviert, um durch eine Druckabsenkung in der Prüfzelle 3 eine Effektivität der Kühlung zu erhöhen. Es sei ferner angemerkt, dass nicht nur die Batterie direkt, sondern beispielsweise auch ein Druck innerhalb der Prüfzelle 3 überwacht werden kann. Auch können beispielsweise Sensoren zur Messung einer auf ein Batteriegehäuse wirkenden Kraft durch eine Gasentfaltung im Inneren der Batterie vorgesehen werden, welche z. B. als Dehnmessstreifen an der Außenseite der Batterie 2 angebracht werden können. Alternativ oder zusätzlich kann eine Ausdehnung der Batterie auch berührungslos, beispielsweise mittels Abstandssensoren, z. B. über Batterieangulation, erfasst werden.

Somit kann erfindungsgemäß ein Batterieprüfstand mit einer erhöhten Sicherheit durch die Kühlvorrichtung 7 bereitgestellt werden. Hierdurch können kritische Situationen bei der Überprüfung von Batterien durch die Regelungseinheit 4 erkannt werden und mittels der Kühlvorrichtung 7 die Batterie abgekühlt werden bzw. ein Druck abgesenkt werden, um eine Gefahrensituation zu vermeiden. Es sei hierbei angemerkt, dass selbstverständlich die Kühlvorrichtung 7 auch mehrfach angeordnet sein kann, um eine Redundanz im Notfall aufzuweisen. Auch können mehrere Kühlvorrichtungen verwendet werden, um mehrere Bereiche der Batterie 2 abzukühlen. Beispielsweise können zusätzliche Düsen seitlich oder an den Stirnseiten der Batterie 2 angeordnet werden. Die Düsen können dabei über nur einen Druckbehälter 8 versorgt werden, oder alternativ auch jeweils über separate Druckbehälter mit Kühlmedium versorgt werden.

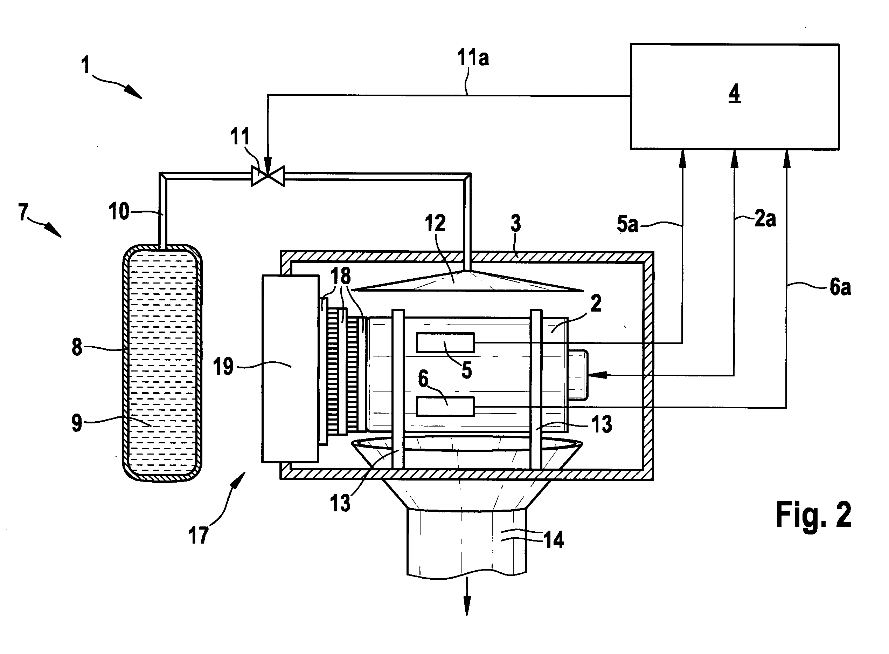

Nachfolgend wird unter Bezugnahme auf Fig. 2 ein Batterieprüfstand 1 gemäß einem zweiten Ausführungsbeispiel der Erfindung im Detail beschrieben. Gleiche bzw. funktional gleiche Teile sind dabei mit den gleichen Bezugszeichen wie im ersten Ausführungsbeispiel bezeichnet.

Im Unterschied zum ersten Ausführungsbeispiel umfasst der Batterieprüfstand 1 des zweiten Ausführungsbeispiels zwei Kühlvorrichtungen. Eine erste Kühlvorrichtung 7 ist wie im ersten Ausführungsbeispiel mit Druckbehälter 8, Leitung 10, Schaltventil 11 und Düse 12 ausgebildet. Ferner ist eine zweite Kühlvorrichtung 17 vorgesehen, welche eine Vielzahl von Peltier-Einheiten 18 und einen Wärmeübertrager 19 umfasst. Der Wärmeübertrager 19 ist im Gehäuse der Prüfzelle 3 angeordnet und befindet sich mit seiner nach innen gerichteten Seite mit den Peltier-Einheiten 18 in Verbindung. Die Peltier-Einheiten 18 sind dabei in Pyramidenform aufgebaut und umfassen jeweils flächig aneinander gesetzte Peltier-Elemente. Durch den pyramidenförmigen Aufbau ergibt sich ein mehrstufiges Kühlsystem, wobei die letzte Stufe mit dem Wärmeübertrager 19 in Verbindung steht. Im gezeigten Ausführungsbeispiel ist die zweite Kühlvorrichtung 17 mit einem Ende der Batterie 2 verbunden. Alternativ ist es jedoch auch möglich, dass die zweite Kühlvorrichtung 17 erst im Notfall mit der Batterie verbunden wird. Dies kann beispielsweise derart realisiert werden, dass die zweite Kühlvorrichtung 17 auf einer Linearzuführungsanordnung angeordnet ist und bei Erfassung eines Notfalls die zweite Kühlvorrichtung 17 linear bewegt wird, bis sie mit der Batterie 2 in Kontakt steht, um Wärme von der Batterie abzuführen. Ansonsten entspricht dieses Ausführungsbeispiel dem ersten Ausführungsbeispiel, so dass auf die dort gegebene Beschreibung verwiesen werden kann. Es sei hierbei ferner angemerkt, dass als zweite Kühlvorrichtung alternativ auch lediglich ein Wärmeübertrager mit einem Flüssigmedium oder eine zweite Kühlvorrichtung mit einem Kaltluftstrom möglich wäre. Die Verwendung der Peltier-Einheiten als zweie Kühlvorrichtung 17 weist jedoch demgegenüber den Vorteil eines kleinen Bauraums und einer sehr effektiven Kühlungsmöglichkeit auf.

Ferner sei angemerkt, dass der Batterieprüfstand zusätzlich noch eine Stromunterbrechungseinrichtung umfassen kann, um einen von der Batterie 2 erzeugten Strom in einem Notfall zu unterbrechen. Hierdurch wird sichergestellt, dass keine zusätzliche Wärme durch Betreiben der Batterie 2 erzeugt wird.

## Patentansprüche

1. Batterieprüfstand, umfassend:
- eine Prüfzelle (3), in welcher eine zu prüfende Batterie (2) angeordnet ist,
- eine Halterung (13), welche in der Prüfzelle (3) angeordnet ist, und in der Lage ist, die Batterie (2) aufzunehmen,
- eine Regelungseinheit (4), welche mit einer in der Halterung (13) angeordneten Batterie (2) verbindbar ist,
- wenigstens eine Sensoreinrichtung (5, 6) zur Überwachung der Batterie (2), wobei die Sensoreinrichtung (5, 6) mit der Regelungseinheit (4) verbunden ist, und
- eine Kühlvorrichtung (7), welche mit der Regelungseinheit (4) verbunden ist und welche ausgelegt ist, in einer Gefahrensituation die Batterie (2) in der Prüfzelle (3) von außen zu kühlen, **dadurch gekennzeichnet dass**
die Kühlvorrichtung wenigstens eine Peltier-Einheit (18) umfasst, welche in der Prüfzelle (3) angeordnet ist, um die Batterie (2) zu kühlen.

2. Batterieprüfstand nach Anspruch 1, **gekennzeichnet durch** eine Vielzahl von Peltier-Einheiten (18), welche in Pyramidenform angeordnet sind.

3. Batterieprüfstand nach Anspruch 2, **dadurch gekennzeichnet, dass** durch die Vielzahl von Peltier-Einheiten (18) mehrere Stufen der Kühlung erreicht werden, so dass Temperaturdifferenzen bis zu 70 Kelvin und Temperaturen unter 0°C erreicht werden können.

4. Batterieprüfstand nach einem der vorhergehenden Ansprüche, **dadurch gekennzeichnet, dass** die Kühlvorrichtung mit einem Ende der Batterie (2) verbunden ist.

5. Batterieprüfstand nach einem der Ansprüche 1 bis 3, **dadurch gekennzeichnet, dass** die Kühlvorrichtung auf einer Linearzuführungsanordnung angeordnet ist und bei Erfassung eines Notfalls die Kühlvorrichtung linear bewegt wird, bis sie mit der Batterie (2) in Kontakt steht, um Wärme von der Batterie (2) abzuführen.

6. Batterieprüfstand nach einem der vorhergehenden Ansprüche, **dadurch gekennzeichnet, dass** die Kühlvorrichtung ferner einen Wärmeübertrager (19) umfasst, welcher mit der Peltier-Einheit (18) verbunden ist, um Wärme von der Peltier-Einheit (18) zu einer Außenseite der Prüfzelle (3) zu übertragen.

7. Batterieprüfstand nach einem der vorhergehenden Ansprüche, umfassend wenigstens eine weitere Kühlvorrichtung (7), wobei die weitere Kühlvorrichtung (7) einen mit Kühlmedium gefüllten Druckbehälter (8), welcher über eine Leitung (10) mit der Prüfzelle (3) verbunden ist, und ein Schaltventil (11) umfasst, welches mit der Regelungseinheit verbunden ist, wobei das Schaltventil (11) in der Leitung (10) angeordnet ist und mittels der Regelungseinheit (4) öffenbar und verschließbar ist, um das Kühlmedium auf die Batterie (2) zu leiten.

8. Batterieprüfstand nach einem der vorherigen Ansprüche, **dadurch gekennzeichnet, dass** die Sensoreinrichtung einen Temperatursensor (6) und/oder einen Drucksensor (5) und/oder einen Kraftsensor, insbesondere Dehnungsmessstreifen, und/oder einen Abstandssensor umfasst.

9. Batterieprüfstand nach einem der vorhergehenden Ansprüche, ferner umfassend eine Absaugvorrichtung (14), um Medium aus der Prüfzelle (3) abzusaugen und insbesondere einen Unterdruck in der Prüfzelle (3) zu erzeugen.

10. Batterieprüfstand nach einem der vorhergehenden Ansprüche, ferner umfassend eine Stromunterbrechungseinrichtung, um einen durch die Batterie erzeugten Strom zu unterbrechen.

## Claims

1. Battery test stand, comprising:
- a test cell (3) in which a battery (2) to be tested is arranged,
- a mount (13) which is arranged in the test cell (3) and is capable of accommodating the battery (2),
- a control unit (4) which can be connected to a battery (2) arranged in the mount (13),
- at least one sensor device (5, 6) for monitoring the battery (2), wherein the sensor device (5, 6) is connected to the control unit (4), and
- a cooling device (7) which is connected to the control unit (4) and which is configured to cool the battery (2) in the test cell (3) from the outside in a hazardous situation, **characterized in that** the cooling device comprises at least one Peltier unit (18) which is arranged in the test cell (3) in order to cool the battery (2).

2. Battery test stand according to Claim 1, **characterized by** a plurality of Peltier units (18) which are arranged in a pyramid form.

3. Battery test stand according to Claim 2, **characterized in that** a plurality of cooling stages are obtained by means of the plurality of Peltier units (18), with the result that temperature differences up to 70 Kelvin and temperatures below 0°C can be reached.

4. Battery test stand according to one of the preceding claims, **characterized in that** the cooling device is connected to one end of the battery (2).

5. Battery test stand according to one of Claims 1 to 3, **characterized in that** the cooling device is arranged on a linear feed arrangement, and when an emergency is detected the cooling device is moved linearly until it is in contact with the battery (2) in order to conduct heat away from the battery (2).

6. Battery test stand according to one of the preceding claims, **characterized in that** the cooling device also comprises a heat exchanger (19) which is connected to the Peltier unit (18) in order to transfer heat from the Peltier unit (18) to an outer side of the test cell (3).

7. Battery test stand according to one of the preceding claims, comprising at least one further cooling device (7), wherein the further cooling device (7) comprises a pressurized vessel (8) which is filled with cooling medium and is connected via a line (10) to the test cell (3) and comprises a switching valve (11) which is connected to the control unit, wherein the switching valve (11) is arranged in the line (10) and can be opened and closed by means of the control unit (4) in order to conduct the cooling medium to the battery (2).

8. Battery test stand according to one of the preceding claims, **characterized in that** the sensor device comprises a temperature sensor (6) and/or a pressure sensor (5) and/or a force sensor, in particular strain gauge, and/or a distance sensor.

9. Battery test stand according to one of the preceding claims, also comprising a suction device (14) for sucking medium out of the test cell (3) and, in particular, generating a partial vacuum in the test cell (3).

10. Battery test stand according to one of the preceding claims, also comprising a power interrupter device for interrupting a current which is generated by the battery.

## Revendications

1. Banc essai de batterie comprenant :
une cellule d'essai (3) dans laquelle est placée une batterie (2) à tester,
un support (13) disposé dans la cellule d'essai (3) et capable de reprendre la batterie (2) et
une unité de régulation (4)
apte à être reliée à une batterie (2) placée dans le support (13), au moins un ensemble de capteurs (5, 6) qui surveille la batterie (2), l'ensemble de capteurs (5, 6) étant relié à l'unité de régulation (4), et un dispositif de refroidissement (7) relié à l'unité de régulation (4) et conçu pour, en cas de danger, refroidir de l'extérieur la batterie (2) placée dans la cellule d'essai (3),
**caractérisé en ce que**
le dispositif de refroidissement comporte au moins une unité Peltier (18) disposée dans la cellule d'essai (3) pour refroidir la batterie (2).

2. Banc essai de batterie selon la revendication 1, **caractérisé par** plusieurs unités de Peltier (18) disposées en forme de pyramide.

3. Banc essai de batterie selon la revendication 2, **caractérisé en ce que** plusieurs étages de refroidissement peuvent être réalisés à l'aide des différentes unités Peltier (18) de manière à pouvoir atteindre des différences de température atteignant 70 Kelvin et des températures inférieures à 0°C.

4. Banc essai de batterie selon l'une des revendications précédentes, **caractérisé en ce que** le dispositif de refroidissement est raccordé à une extrémité de la batterie (2).

5. Banc essai de batterie selon l'une des revendications 1 à 3, **caractérisé en ce que** le dispositif de refroidissement est disposé sur un ensemble de guidage linéaire et **en ce que** lorsqu'une situation de danger est détectée, le dispositif de refroidissement est déplacé linéairement jusqu'à être amené en contact avec la batterie (2) pour évacuer la chaleur de la batterie (2).

6. Banc essai de batterie selon l'une des revendications précédentes, **caractérisé en ce que** le dispositif de refroidissement comporte en outre un dispositif (19) de transfert de chaleur raccordé à l'unité Peltier (18) pour transférer la chaleur de l'unité Peltier (18) à un côté extérieur de la cellule d'essai (3).

7. Banc essai de batterie selon l'une des revendications précédentes, comportant au moins un autre dispositif de refroidissement (7), l'autre dispositif de refroidissement (7) comportant un récipient sous pression (8) rempli de fluide de refroidissement et raccordé à la cellule d'essai (3) par un conduit (10), ainsi qu'une soupape de commutation (11) raccordée à l'unité de régulation, l'unité de commutation (11) étant disposée dans le conduit (10) et pouvant être ouverte ou fermée au moyen de l'unité de régulation (4) pour conduire le fluide de refroidissement sur la batterie (2).

8. Banc essai de batterie selon l'une des revendications précédentes, **caractérisé en ce que** l'ensemble de capteurs comporte un capteur de température (6), un capteur de pression (5) et/ou un capteur de force, en particulier un ruban de mesure d'allongement, et/ou un capteur de distance.

9. Banc essai de batterie selon l'une des revendications précédentes, comportant en outre un dispositif d'aspiration (14) qui aspire un fluide hors de la cellule d'essai (3) et forme en particulier une dépression dans la cellule d'essai (3).

10. Banc essai de batterie selon l'une des revendications précédentes, comportant en outre un dispositif d'interruption du courant pour interrompre le courant délivré par la batterie.
